# EUROPEAN PATENT APPLICATION

(11) **EP 4 012 201 A1**
(43) Date of publication of application: **15.06.2022**
(21) Application number: 20850431.6
(22) Date of filing: 08.08.2020
(51) Int. Cl.: F16B 21/02, G01D 11/30, F16B 5/12

(54) **FIXING COMPONENT**

(30) Priority: 08.08.2019 JP 2019146861
(71) Applicant: Nippon Aleph Co., Ltd., Tokyo 105-0014 (JP)
(72) Inventor: KOSUGE, Eiichi, Tokyo 105-0014 (JP); YAJIMA, Koichi, Tokyo 105-0014 (JP); HAGIYAMA, Masaya, Tokyo 105-0014 (JP)
(74) Representative: Isarpatent
(86) International application number: PCT/JP2020/030528
(87) International publication number: WO 2021/025173

(57) **Abstract**

Provided is a fixing component 20 for releasably fixing an object such as a proximity sensor 10 housed within a hollow portion 17 of a housing unit 18 provided with an opening 16 narrower than the inside thereof. The fixing component 20 has a head 21 disposed rotatably at the opening 16 of the housing unit 18, the head having a head main body 25 disposed between the opposing surfaces 16a, 16a of the opening 16. On the side peripheral surface 25a of the head main body 25, radially loose-fit portions 31, which are loosely fitted between the opposing surfaces 16a, 16a of the opening 16, and radially locked portions 32, which are locked between the opposing surfaces 16a, 16a of the opening 16, are provided in the circumferential direction, and at positions corresponding to the radially locked portions 32 of the head 21, axially locked portions 26, which protrude outward from the radially locked portions 32 in the radial direction, are provided to allow attachment/detachment of the housed object and prevent the housed object from falling through the opening without fail.

## Description

### Technical Field

The present invention relates to a fixing component for fixing an object housed in a hollow portion of a housing unit in a state releasable from the opening of the housing unit.

### Background Art

To fix an object housed in a hollow portion of a base in a state releasable from an opening of the base, a fixing member has conventionally been used. For example, in Patent Literature 1, a proximity sensor is housed in a hollow portion of a base having an opening, and by pressing the proximity sensor against the bottom surface from the side of the opening using a fixing screw, the detecting unit is appressed and fixed. This fixing screw has an abutting portion that abuts on the periphery of the opening from inside. By rotating the fixing screw, a slanting surface provided for the abutting portion at an angle in a peripheral direction is pressed against the periphery of the opening of the base, thus pressing down the proximity sensor against the bottom face.

In Patent Literature 2, a sensor is fixed by a rotatable clamping member placed on opposing internal surfaces of a fixing notch. The clamping member has two clamping surfaces arranged on opposing internal surfaces of the fixing notch and formed in an eccentric shape at positions facing each other with respect to the rotational axis. The clamping is performed by the teeth of the fixing notch with the rotation of the clamping member.

### Citation List

### Patent Literature

Patent Literature 1: WO 2011/039892 A1
Patent Literature 2: DE 102007058411 A1

### Summary of Invention

### Problems to be solved by the Invention

However, the fixing member in prior art has a part having a width narrower than the width between the opposing surfaces of the opening of the base to attach/detach the member through the opening of the base, and at other positions, the member is pressed down against the inner surface of the base either in axial or radial direction. As a result, when a force is applied to the inner surface of the base in a direction different from the pressing direction, the displacement may result, and in the worst case, the member may fall through the opening.

With the fixing screw disclosed in Patent Literature 1, since the slanting surface of the abutting portion is pressed down against the periphery of the opening in the axial direction by rotating the fixing screw, the displacement may result in the radial direction. With the clamping member in Patent Literature 2, since the clamping surface is pressed down against the inner surfaces of the opening in the radial direction, displacement may be caused in the axial direction.

The purpose of the present invention is to provide a fixing component capable of attaching/detaching an object housed in a hollow portion of a base (hereinafter referred as a housing unit) having an opening narrower than the inside, fixing the object between the opposing surfaces of the opening of the housing unit, and preventing the object from falling through the opening.

### Means for Solving the Problem

To achieve the above objective, the fixing component of the present invention is used to releasably fix an object housed in a hollow portion of a housing unit having an opening narrower than the inside, and comprises a head rotatably disposed in the opening of the housing unit, the head having a head main body disposed between the opposing surfaces of the opening of the housing unit. On the side peripheral surface of the head main body, a radially loose-fit portions, which are loosely fitted between the opposing surfaces of the opening, and radially locked portions, which are locked between the opposing surfaces of the opening, are provided in the circumferential direction, and at positions corresponding to the radially locked portions of the head, axially locked portions that protrude outward from the radially locked portions in the radial direction are provided.

The radially locked portions of the fixing component of the present invention may have a plurality of convex portions, which are preferably axially long protrusions arranged in parallel . The axially locked portions are preferably provided at the bottom end of the head apart from the opening so as to be disposed within the hollow portion of the housing unit to prevent displacement in the vertical direction within the housing unit. The axially locked portions may be provided at positions in the opening so as to overlap with the radially locked portions of the head main body. It is desirable that radially incremental portions be formed between the convex portions of the radially locked portions and the radially loose-fit portions.

It is desirable that the fixing component of the present invention be provided with a rotation checking means at the top of the head on the outside in the axial direction to check an amount of rotation of the head. The rotation checking means may be a tool-fitting part for fitting a tool for rotating the head.

### Effects of the Invention

According to the fixing component of the present invention, since radially loose-fit portions, which are loosely fitted between the opposing surfaces of the opening of the housing unit, and radially locked portions, which are locked between the opposing surfaces of the opening of the housing unit, are provided in the circumferential direction on the peripheral surface of the head main body, the head can be attached to and detached from the opposing surfaces of the opening of the housing unit by rotation, and the object housed within the hollow portion of the housing unit can be fixed securely with the fixing component. Since the fixing component of the present invention has axially locked portions that protrude outward from the radially locked portions in the radial direction at positions corresponding to the radially locked portions of the head, the axially locked portions abut on or are pressed against the narrow opening of the hollow portion to prevent falling even if an outward force is applied to the fixing component in the axial direction in a state where the radially locked portions are locked between the opposing surfaces of the opening. According to the present invention, the fixing component is prevented from coming off through the opening of the housing unit, and the object housed within the hollow portion can be held securely with the fixing component. Since the axially locked portions are provided at positions corresponding to the radially locked portions, the axially locked portions can pass through the opposing surfaces of the opening without being locked by the opening in a state where the radially loose-fit portions are positioned between the opposing surfaces of the opening, thus allowing the fixing component to be attached/detached securely. The present invention thus provides a fixing component that can allow the object housed in the hollow portion of the housing unit having an opening narrower than the inside to be attached/detached easily, and can fix the object between the opposing surfaces of the opening to prevent it from falling through the opening.

With the fixing component of the present invention, if the radially locked portions have a plurality of convex portions, once the radially locked portions are locked between the opposing surfaces of the opening by rotating the fixing component around the axis, the convex portions are pressed down strongly against the opposing surfaces. Consequently, the locking force of the radially locked portions increases. Furthermore, since the axially locked portions, which protrude outward from the radially locked portions in the radial direction, are provided at positions within the hollow portion of the head, an outward force in the axial direction is applied to the fixing component in a state where the radially locked portions are locked between the opposing surfaces of the opening. Consequently, even if the outward displacement might occur in the axial direction, the axially locked portions in the hollow portion can be abutted on the narrow opening from inside and thus the falling through the opening can be prevented without fail.

In the case described above, if the axially locked portions are arranged apart from the opening, the axially locked portions do not contact the opening when the radially locked portions are locked between the opposing surfaces of the opening, which allows the fixing component to be rotated without being inhibited by the axially locked portions regardless of the shape of the hollow portion. Furthermore, since the axially locked portions do not contact the periphery of the opening of the hollow portion when the radially locked portions are made to be pressed against the opposing surfaces of the opening, the rotation of the head is not restricted, and the radially locked portions can be locked stably to fix the fixing component.

With the fixing component of the present invention, if the axially locked portions are provided at positions in the opening so as to overlap with the radially locked portions of the head main body, the axially locked portions can also be pressed down between the opposing surfaces of the opening simultaneously by rotating the head, thus pressing down the radially locked portions between the opposing surfaces of the opening. The radially locked portions and the axially locked portions can thus be made to sink between the opposing surfaces of the opening at the same time, for example, and the fixing component can be fixed between the opposing surfaces securely to be prevented from falling through the opening.

With the fixing component of the present invention, if the rotation checking means is provided in the outer top portion of the head in the axial direction to check the amount of rotation of the head, whether the fixing component is locked between the opposing surfaces of the opening can be checked from outside in mounted state, which is convenient. If the tool-fitting part is provided to fit the tool for rotating the head as a means to check the amount of rotation, the rotating position can be checked with the fitting part without separately providing a rotation checking means, thus simplifying the structure of the fixing component.

### Brief Description of Drawings

FIG. 1A is an oblique perspective view from diagonally above of a proximity sensor that is fixed using a fixing component in a first embodiment of the present invention.
FIG. 1B is an oblique perspective view of the proximity sensor from diagonally below.
FIG. 2 is a front view of the proximity sensor in a state fixed by the fixing component in the first embodiment.
FIG. 3 is a partial cross-sectional oblique perspective view showing a state where the proximity sensor is attached to an object to be detected using the fixing component in the first embodiment.
FIG. 4 is an oblique perspective view from diagonally above of the fixing component in the first embodiment.
FIG. 5A is a plan view of the fixing component in the first embodiment.
FIG. 5B is a front view of the fixing component in the first embodiment.
FIG. 5C is a bottom view of the fixing component in the first embodiment.
FIG. 6A is a partial magnified view for explaining how to attach the proximity sensor to the object to be detected by using the fixing component in the first embodiment, showing a state before inserting the proximity sensor into a groove for fixing.
FIG. 6B shows a state after the proximity sensor is fixed into a wide groove.
FIG. 7 is a cross-sectional view showing a state where the proximity sensor is attached and fixed to the object to be detected using the fixing component in the first embodiment.
FIG. 8A is an oblique perspective view from diagonally above of a fixing component in a second embodiment.
FIG. 8B is a plan view of the fixing component in FIG. 8A.
FIG. 9 is a cross-sectional view showing a state where the proximity sensor is attached and fixed to the object to be detected using the fixing component in the second embodiment.

### Embodiments of the Invention

Some embodiments of the present invention will hereinafter be described in detail by referring to the attached drawings.

The following embodiment shows an example where a proximity sensor is housed within the groove of a housing unit as a stored item and fixed: the housing unit that stores the proximity sensor is mounted in the vicinity of the moving part of a pneumatic component. Note, however, that the housing unit is not limited only to cases for housing electronic parts. Cases with a hollow portion for housing an object through an opening and other cases for housing various parts, etc. to be attached to various machines such as machine tools, control devices, and copying machines etc. are also allowed. Likewise, the applications, shapes, etc. of the objects to be housed in the housing unit are not limited, either: any objects that can be housed through the opening are applicable. It is necessary to understand that the shapes and applications of objects are not limited to specific ones, provided that the displacement and rattling of the object housed in the housing unit can be prevented.

### First embodiment

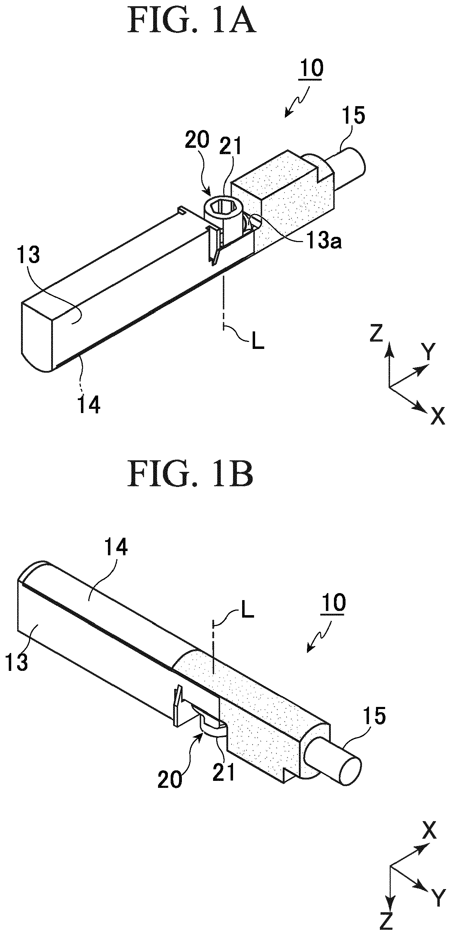

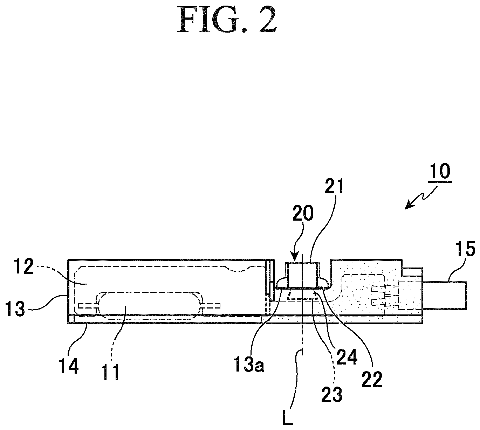

As shown in FIGS. 1 and 2, a proximity sensor 10 as an object to be housed is in a structure where a base 12 that fixes a detecting element 11 is housed in a case 13 and embedded in a resin, with a detecting unit 14 having the detecting element 11 provided on one side, and from the other side, an external cord 15 connected to the base 12 extends toward outside. The detecting unit 14 on one side has a downward detecting surface, and on the top on the other side, a fixing component 20 for attaching the proximity sensor 10 to a housing unit 18 is mounted. As shown in FIG. 1A, axis L of the fixing component 20 is in Z direction, with the radial direction of axis L corresponding to X-Y plane, which is vertical to axis L.

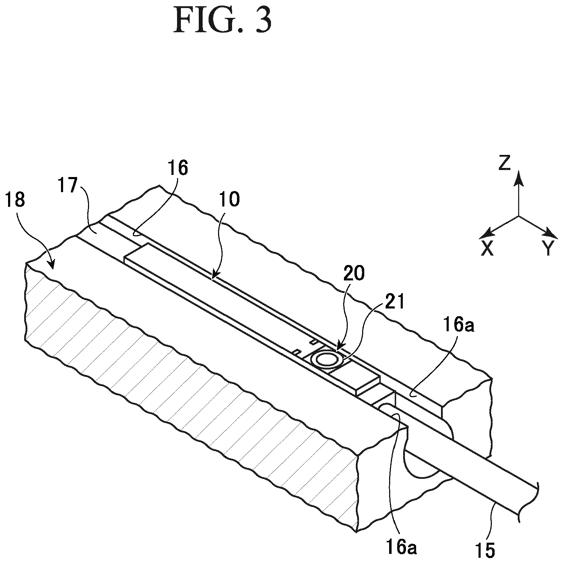

As shown in FIG. 3, the proximity sensor 10 is used by being mounted to a housing unit 18 provided in proximity to the moving part of a pneumatic component, etc. The housing unit 18 for housing the proximity sensor 10 is provided with a long and narrow groove, for example: a hollow portion 17 having an opening 16 narrower than the inside is provided. The proximity sensor 10 is housed in the hollow portion 17 of the housing unit having the opening 16, and releasably fixed by the fixing component 20. In the example shown, the proximity sensor 10 is housed in the hollow portion 17 between a pair of opposing surfaces 16a, 16a that form the opening 16, and then releasably fixed by the fixing component 20.

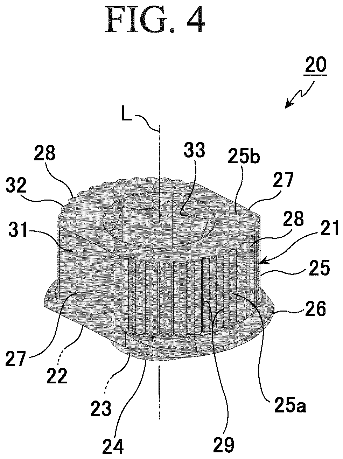

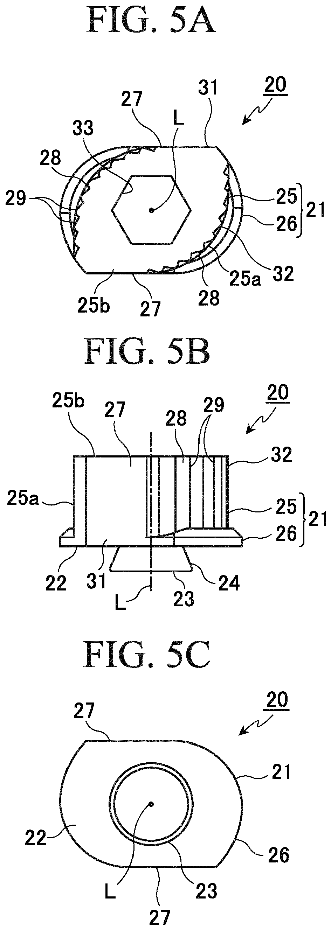

The fixing component 20 is mounted between the detecting unit 14 of the proximity sensor 10 and the external cord 15, and as shown in FIGS. 4 and 5A to 5C, has a head 21 that is placed at the opening 16 of the housing unit 18, supported by the proximity sensor 10. The head 21 has a head main body 25, which is placed between the opposing surfaces 16a, 16a of the opening 16, and axially locked portions 26, which are provided in proximity to the bottom part of the head main body 25 in the direction of axis L.

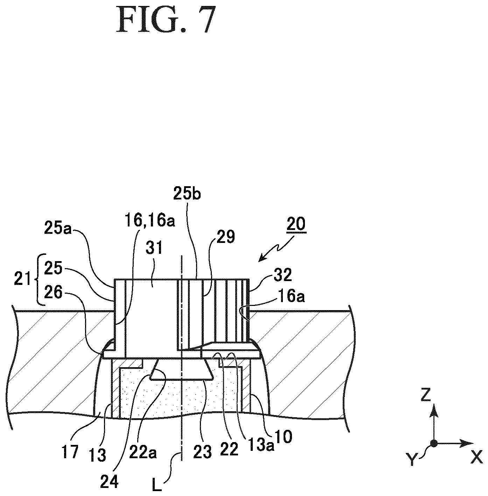

The head main body 25 has a side peripheral surface 25a whose modified cross-sectional shape orthogonal to axis L continues in a constant form in the direction of axis L, and a top portion 25b exposed from the opening 16 in mounted state. At the bottom end opposite to the top portion 25b of the head 21 in the direction of axis L, an abutting surfaces 22 that abut on a supporting surface 13a of the proximity sensor 10 are provided, and a rotating shaft 23 that protrudes further downward from the abutting surfaces 22 in the direction of axis L is rotatably supported by a recessed portion 22a (shown in FIG. 7) of the supporting surface 13a of the case 13.

The rotating shaft 23 may be in a cylindrical, conical, or spherical form to facilitate rotation. To mount the fixing component 20 onto the proximity sensor 10 by insert molding, it is desirable that the rotating shaft 23 be in a conical or spherical form to embed it in the proximity sensor 10 to prevent it from coming off. In this embodiment, it is formed as a conical part 24 in a shape of a cone whose radius expands downward.

On the side peripheral surface 25a of the head main body 25, a pair of planar portions 27 are provided approximately in parallel to each other at positions 180 degrees opposite with respect to axis L, and a pair of projecting portions 28 are also provided at positions 180 degrees opposite with respect to axis L so as to be continuous with the pair of planar portions 27.

By setting the distance between the pair of planar portions 27 in the radial direction shorter than the width between the opposing surfaces 16a, 16a of the opening 16 of the housing unit 18, radially loose-fit portions 31, which can loosely fit the pair of planar portions 27 along the space between the opposing surfaces 16a, 16a of the opening, can be configured.

The distance between the pair of projecting portions 28 in the radial direction is set longer than that of the radially loose-fit portions 31 and approximately the same as the width between the opposing surfaces 16a, 16a of the opening 16. At the same time, the portions longer than the width of the opposing surfaces 16a, 16a are formed partially, which produces radially locked portions 32 that can be locked between the opposing surfaces 16a, 16a.

For each projecting portion 28 of the radially locked portions 32, many convex portions 29 along axis L are provided in a circumferential direction spaced from each other. At the pointed end of each convex portion 29, a streaky corner is provided, presenting a shape that allows one side in the circumferential direction to be locked between the opposing surfaces 16a, 16a of the opening 16 more easily than the other side. The fixing component can be manufactured by using a metal or hard resin, for example. As a metal, iron, stainless steel, copper, brass, etc. may be used. In the first embodiment, a plurality of convex portions 29 are provided spaced from each other by knurling.

A virtual outline created by connecting the pointed ends of the plurality of convex portions 29 in each projecting portion 28 is an arc-shaped surface, which may be eccentric with respect to axis L of the head 21. Each projecting portion 28 is configured eccentrically so that the distance from axis L on one side in the circumferential direction around axis L becomes longer than that on the other side. By rotating the head 21 around axis L on one side, the distance between the radially locked portions 32 at a given point on the outer periphery slightly increases, whereas by moving the head on the other side, the distance decreases slightly. By setting the distance between the pair of radially locked portions 32 on the outer periphery between that shorter than the distance between the opposing surfaces 16a, 16a of the opening 16 to that longer than the distance between the opposing surfaces 16a, 16a, the radially locked portions 32 can be locked between the opposing surfaces 16a, 16a by the rotational movement of the head 21.

As described above, on the side peripheral surfaces 25a of the head main body 25, radially loose-fit portions 31, which are loosely fitted between the opposing surfaces 16a, 16a of the opening 16, and radially locked portions 32, which are locked between the opposing surfaces 16a, 16a of the opening 16, are provided in the circumferential direction. The radially locked portions 32 and the radially loose-fit portions 31 are provided continuously toward one side in the circumferential direction, with the length of the head main body 25 on the outer periphery slightly increasing toward one side in the circumferential direction. The head main body 25 can thus be rotated from the state where the radially loose-fit portions 31 are loosely fitted between the opposing surfaces 16a, 16a of the opening 16 until the radially locked portions 32 are locked.

To the top portion 25b of the head 21, a rotation amount checking means is provided to check the amount of rotation of the head 21. The rotation checking means is a mark placed at a position other than the position of axis L on the top portion 25b, and the amount of rotation can be checked by viewing the change of the position of the head 21 by rotation with respect to axis L. In the first embodiment, the rotation checking means is a tool-fitting part 33 for fitting a tool used to rotate the fixing component 20. Specifically, the tool-fitting part 33 is a hexagonal fitting hole provided at the top portion 25b of the head 21 of the fixing component 20 so that a hexagonal wrench key can be fitted in.

The axially locked portions 26 are provided in proximity to the head main body 25 in the direction of axis L. A pair of axially locked portions 26 are provided on the same surface as the abutting surfaces 22 at the bottom of the head main body 25 so that they come at the same circumferential position corresponding to the radially locked portions 32 around the axis L, and have a shape protruding outward in the radial direction from the radially locked portions 32, which allows the maximum distance of the axially locked portions 26 from the axis in the radial direction to be set longer than the width between the opposing surfaces 16a, 16a of the opening 16.

In the first embodiment, the pair of axially locked portions 26 are formed in an arc-like shape whose diameter around axis L is larger than the width between the opposing surfaces 16a, 16a of the opening 16, the axially locked portions and the planar portions 27 of the head main body 25 being smoothly continuous with different curvatures. The axially locked portions 26 are positioned in the hollow portion 17 so as to remain apart from the opening 16 of the hollow portion 17 in a state where the fixing component 20 is mounted, namely where the abutting surfaces 22 of the head 21 abut on the supporting surface 13a of the proximity sensor 10 housed in the hollow portion 17 of the housing unit 18.

How to place the proximity sensor 10 in the hollow portion 17 of the housing unit 18 for mounting by using the fixing component 20 is described below.

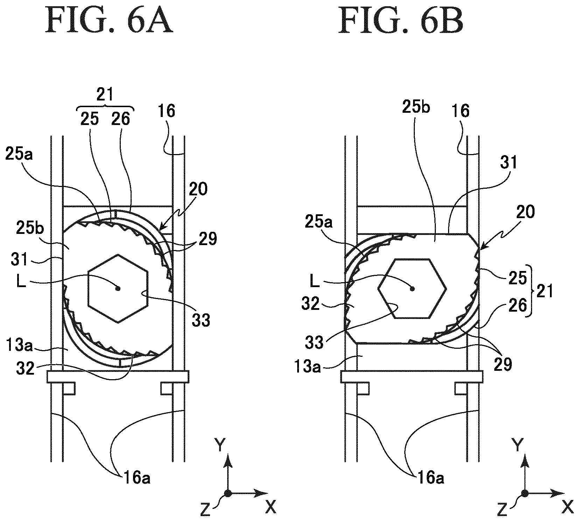

First, as shown in FIG. 6A, the proximity sensor 10 is inserted into the hollow portion 17, the fixing component 20 is placed on the supporting surface 13a of the proximity sensor 10, and the head main body 25 is placed between the opposing surfaces 16a, 16a of the opening 16.

The orientation of the head main body 25 is adjusted in advance by rotating the head 21 of the fixing component 20, and the radially loose-fit portions 31 are placed so as to be fitted in the width direction of the proximity sensor 10. The radially loose-fit portions 31 are thus positioned between the opposing surfaces 16a, 16a of the opening 16, with the radially locked portions 32 positioned along the longitudinal direction (Y direction) of the opening 16. The axially locked portions 26 are placed in the hollow portion 17 through the opening 16 in a state where they are placed at the positions of the radially locked portions 32.

Then, as shown in FIG. 6B, a tool not shown is fitted into the tool-fitting part 33, and the fixing component 20 is rotated while the proximity sensor 10 is pressed down into the groove to change the orientation of the head main body 25 and the axially locked portions 26 to the width direction of the proximity sensor 10. In the first embodiment, the rotation is within a range less than the half turn.

As shown in FIG. 7, with the rotation of the fixing component 20, the head main body 25 is placed so that the radially loose-fit portions 31 are positioned along the longitudinal direction (Y direction) of the opening 16, with the distance between the radially locked portions 32 on both sides of the outer periphery increasing at a given point between the opposing surfaces 16a, 16a of the opening 16. The radially locked portions 32 are thus pressed down between the opposing surfaces 16a, 16a of the opening 16, and the fixing component 20 is locked in the opening 16. The axially locked portions 26 are positioned within the hollow portion 17 in a state apart from the opposing faces 16a of the opening 16 and from the inner surface of the hollow portion 17.

The fixing component 20 is fixed between the opposing surfaces 16a, 16a of the opening 16 of the housing unit 18 by the radially locked portions 32, and the proximity sensor 10 is fixed stably within the hollow portion 17 by this fixing component 20. The mounting operation of the proximity sensor 10 has now been completed.

According to the fixing component 20 in the first embodiment described above, since the radially loose-fit portions 31, which are loosely fitted between the opposing surfaces 16a, 16a of the opening 16 of the housing unit 18, and the radially locked portions 32, which are locked between the opposing surfaces 16a, 16a of the opening 16, are provided on the side peripheral surface 25a of the head main body 25, with their circumferences continued, by rotating the head 21, the head 21 can be locked between the opposing surfaces 16a, 16a of the opening 16, and the proximity sensor 10 housed in the hollow portion 17 of the housing unit 18 can be fixed by the fixing component 20.

Since the axially locked portions 26, which protrude outward from the radially locked portions 32 in the radial direction, are placed at positions corresponding to the radially locked portions 32 of the head 21, the axially locked portions 26 abut on or are pressed down against the narrow opening 16 of the hollow portion 17 to prevent falling even if an outward force in the axial direction is applied to the fixing component 20 in a state where the radially locked portions 32 are locked between the opposing surfaces 16a, 16a of the opening 16. In other words, the axially locked portions 26 are positioned at the bottom end corresponding to the radially locked portions 32 of the head 21, being engaged with the hollow portion 17 of the housing unit 18, to prevent rattle in the vertical direction (Z direction). The fixing component 20 thus prevents falling from the opening 16, and the proximity sensor 10 within the hollow portion 17 can be held securely by the fixing component 20.

Since the axially locked portions 26 are provided at positions corresponding to the radially locked portions 32, the axially locked portions 26 pass through the opening 16 without being locked in the opening 16, in a state where the radially loose-fit portions 31 are positioned between the opposing surfaces 16a, 16a of the opening 16, and so the fixing component 20 can be separated and taken out.

With the fixing component 20 in the first embodiment, since the axially locked portions 26, which protrude outward from the radially locked portions 32 in the radial direction, are positioned within the hollow portion 17 of the head 21, the axially locked portions 26 abut on the narrow opening 16 of the hollow portion 17 from inside even if the radially locked portions 32 deviate from the opening 16 outwardly in the direction of axis L. For example, when an outward force in the direction of axis L is applied to the fixing component 20, the external cord 15 is pulled, for example, in a state where the axially locked portions 26 are engaged in the opposing surfaces 16a, 16a of the opening 16 and the proximity sensor 10 is fixed by the fixing component 20, the radially locked portions 32 in locked state deviate outward from the opening 16 in the direction of axis L, displacing the fixing component 20. Even in that case also, the axially locked portions 26 abut on the narrow opening 16 of the hollow portion 17, thus preventing falling without fail.

Since the radially locked portions 32 have a plurality of convex portions 29, when the radially locked portions 32 are locked between the opposing surfaces 16a, 16a of the opening 16 by rotating the fixing component 20 around the axis L, the convex portions 29 are pressed strongly against the opposing surfaces 16a, improving the locking force of the radially locked portions 32.

According to the first embodiment, since the axially locked portions 26 do not contact the proximity of the opening 16 when the radially locked portions 32 are locked between the opposing surfaces 16a, 16a of the opening, the fixing member can be rotated without being inhibited by the axially locked portions 26 regardless of the shape of the hollow portion 17. When the radially locked portions 32 are pressed strongly against the opposing surfaces 16a, 16a of the opening, the axially locked portions 26 do not contact the proximity of the opening 16 of the hollow portion, and so the rotation of the head is not inhibited. The radially locked portions 32 can thus be locked stably, and the fixing component 20 can be fastened.

With the fixing component 20 described above, since the rotation checking means for checking the amount of rotation of the head 21 is provided at the top portion 25b of the head 21 on the outside in the axial direction, whether the fixing component 20 is locked between the opposing surfaces 16a, 16a of the opening 16 can be checked from outside in the mounted state, which is very convenient. In this embodiment, since the rotation checking means is the tool fitting part 33, the rotating position can be checked by the tool fitting part, and so it is unnecessary to provide a separate checking means, thus simplifying the structure of the fixing component 20.

Since the shaft 23, that is rotatable with respect to the proximity sensor 10, is connected to the abutting surface 22 to the proximity sensor 10, the head 21 can be rotated at specified positions with respect to the proximity sensor 10 in a state where the proximity sensor 10 is housed within the hollow portion 17. The proximity sensor 10 can be maintained in a stable state, and can be fixed at a specified position in the hollow portion 17 easily and securely.

### Second embodiment

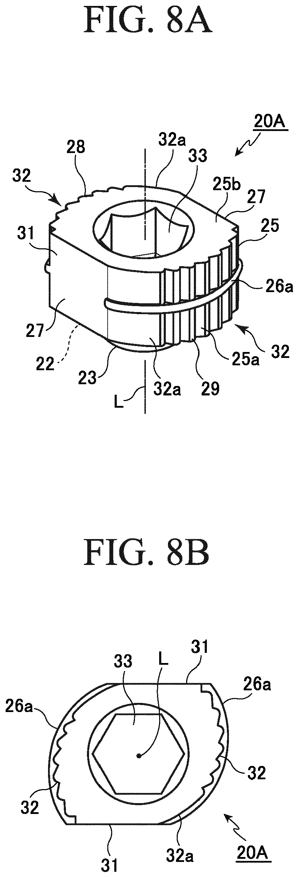

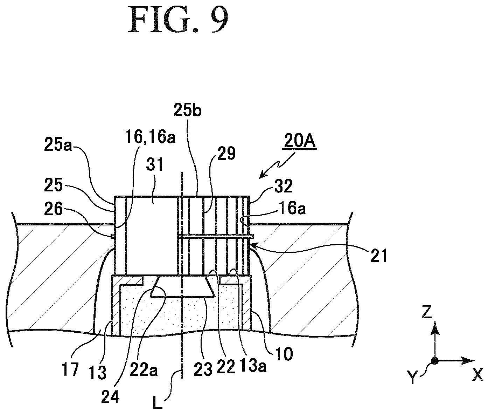

FIGS. 8 and 9 show a fixing component 20A in a second embodiment. This fixing component 20A, which is the same as that in the first embodiment except for the configuration of the head 21, is configured to fix a proximity sensor 10 housed in the hollow portion 17 having a narrow opening 16.

The head 21 of the fixing component 20 in this embodiment has a head main body 25 that is placed between the opposing surfaces 16a, 16a of the opening 16 of the housing unit 18 as same as in the case of the first embodiment. On the side peripheral surface 25a of the head main body 25, radially loose-fit portions 31, which are loosely fitted between the opposing surfaces 16a, 16a, and radially locked portions 32, which are locked between the opposing surfaces 16a, 16a, are provided, with the radially loose-fit portions 31 and the radially locked portions 32 being continuous in the circumferential direction. The radially locked portions 32 have a plurality of convex portions 29 as same as in the case of the head 21 in the first embodiment. Between the convex portions 29 of the radially locked portions 32 and the radially loose-fit portions 27, a radially incremental portions 32a are formed. The radially incremental portions 32a are in an approximately planar shape. At positions overlapping with the radially locked portions 32 in the head 21, axially locked portions 26a, which protrude outward from the radially locked portions 32 in the radial direction, are formed. In the case shown, the axially locked portions 26a are formed at approximately halfway between the top portion 25b and the abutting surface 22. The length of protrusion of the axially locked portions 26a from the radially locked portions 32 ranges from 0.2 mm to 0.3 mm, for example. The other configurations are the same as the head 21 in the first embodiment.

The fixing component 20 in the second embodiment can be mounted with the proximity sensor 10 housed in the hollow portion 17 as same as in the case of the first embodiment. The proximity sensor 10 is inserted into the hollow portion 17, the fixing component 20A is placed on the supporting surface 13a of the proximity sensor 10, and the head main body 25 is placed between the opposing surfaces 16a, 16a of the opening 16. At that time, the radially loose-fit portions 31 are positioned between the opposing surfaces 16a, 16a of the opening 16, and the radially locked portions 32 are positioned along the longitudinal direction (Y direction) of the opening 16.

While the proximity sensor 10 is pressed down against the back of the groove, the fixing component 20A is rotated to make the radially locked portions 32 face the width direction of the proximity sensor 10. The radially incremental portions 32a ensure smooth rotation and allow the gradually-widening radially locked portions 32 to get into and widen the opening 16, and at the same time allow the axially locked portions 26a also to get into the opening 16, thus locking the fixing component 20A in the opening 16. The fixing component 20A fixed securely between the opposing surfaces 16a, 16a of the opening 16 ensures that the proximity sensor 10 is placed stably within the hollow portion 17.

The fixing component 20A in the second embodiment, which has partially the same configuration as the first embodiment, produces the same functional effect as the first embodiment. In addition, as shown in FIG. 8A, since the axially locked portions 26a are placed at central positions, overlapped with the radially locked portions 32, by rotating the head 21 as shown in FIG. 9, the radially locked portions 32 can be pressed down between the opposing surfaces 16a, 16a of the opening 16, and at the same time the axially locked portions 26a can be pressed down between the opposing surfaces 16a, 16a of the opening 16. Each radially locked portion 32 can thus get into each opposing surface 16a, 16a, and at the same time each radially locked portion 32 gets into each opposing surface 16a, 16a to be fixed in any of the directions X, Y, and Z. The fixing component 20A can thus be fixed between the opposing surfaces 16a, 16a, and falling through the opening 16 and rattle in the longitudinal direction (X direction) in the groove are prevented even if the external cord is touched after the mounting.

The above embodiments can be modified as required within the scope of the present invention. In each embodiment described above, the housed object is a proximity sensor 10, but the object is not limited to the proximity sensor. Any objects that can be placed within the hollow portion 17 and can be fixed with the fixing component 20, 20A are applicable.

In the example shown, the hollow portion 17 of the housing unit 18 is formed in the shape of the straight groove. However, the shape is not limited to the groove. Any hollow portions 17 and openings that can house objects are allowed. The shape of the opening of the housing unit is not limited to that in the embodiments shown, but shapes having various inner surfaces and inner peripheral surfaces are also allowed. Even an object that is larger than the opposing surfaces 16a, 16a of the opening 16 can be fixed and mounted by the fixing component 20, 20A of the present invention, provided that it can be placed within the hollow portion 17.

In each embodiment, as the rotation checking means, the tool-fitting part 33 in the shape of the hexagonal fitting hole for fitting the hexagonal wrench key was selected, but the shape of the tool-fitting part 33, which is provided at the head 21 to ensure rotation of the fixing component 20, 20A, and that of the rotation checking means are not limited. For example, the rotation checking means may be in a shape rotatable using driver tools such as those having a longitudinal slit (slitting, minus) or cross slit (plus), and star-shaped tools (hex lobe key wrench). Tools are not limited, provided that the fixing component 20, 20A can be rotated. It is also allowed to provide a mark in various shapes such as protrusion, recess, etc. at the top portion 25b of the head 21, separately from the tool-fitting part 33.

### Reference Signs List

- L:: Axis
- 10:: Proximity sensor
- 11:: Detecting element
- 12:: Base
- 13:: Case
- 13a:: Supporting surface
- 14:: Detecting unit
- 15:: External cord
- 16:: Opening
- 16a:: Opposing surface
- 17:: Hollow portion
- 18:: Housing unit
- 20, 20A:: Fixing component
- 21:: Head
- 22:: Abutting surface
- 22a:: Recessed portion
- 23:: Rotating shaft
- 24:: Conical part
- 25:: Head main body
- 25a:: Side peripheral surface
- 25b:: Top portion
- 26, 26a:: Axially locked portion
- 27:: Planar portion
- 28:: Projecting portion
- 29:: Convex portion
- 31:: Radially loose-fit portion
- 32:: Radially locked portion
- 32a:: Radially incremental portion
- 33:: Tool-fitting part

## Claims

1. A fixing component for releasably fixing an object housed within a hollow portion of a housing unit provided with an opening narrower than the inside thereof, comprising:
a head rotatably disposed in the opening of the housing unit,
the head having a head main body disposed between opposing surfaces of the opening of the housing unit, wherein
radially loose-fit portions loosely fitted between the opposing surfaces of the opening and radially locked portions locked between the opposing surfaces of the opening are provided in a circumferential direction; and
at positions corresponding to the radially locked portions, axially locked portions protruding outward from the radially locked portions in the radial direction are provided.

2. The fixing component as set forth in claim 1, wherein the radially locked portions are provided with a plurality of convex portions.

3. The fixing component as set forth in claim 2, wherein the plurality of convex portions are axially long protrusions arranged in parallel.

4. The fixing component as set forth in claim 1, wherein the axially locked portions are provided at the bottom end of the head apart from the opening so as to be disposed within the hollow portion of the housing unit.

5. The fixing component as set forth in claim 1, wherein the axially locked portions are provided at positions in the opening so as to overlap with the radially locked portions of the head main body.

6. The fixing component as set forth in claim 1, wherein radially incremental portions are formed between the convex portions of the radially locked portions and the radially loose-fit portions.

7. The fixing component as set forth in claim 1, wherein a rotation checking means for checking an amount of rotation of the head is provided at the top portion of the head on the outside in the axial direction.

8. The fixing component as set forth in claim 7, wherein the rotation checking means is a tool-fitting part for fitting a tool for rotating the head.
